(19) **Europäisches Patentamt / European Patent Office / Office européen des brevets**

(11) **EP 4 625 160 A1**

(12) **EUROPEAN PATENT APPLICATION**
published in accordance with Art. 153(4) EPC

(43) Date of publication:
01.10.2025 Bulletin 2025/40

(21) Application number: 23905671.6

(22) Date of filing: 01.12.2023

(51) International Patent Classification (IPC):
$G06F\ 9/445^{(2018.01)}$ $\quad G06F\ 9/50^{(2006.01)}$
$G06N\ 3/02^{(2006.01)}$ $\quad G06N\ 20/00^{(2019.01)}$

(52) Cooperative Patent Classification (CPC):
**G06F 9/445; G06F 9/50; G06N 3/04;**
**H04L 41/0803;** G06N 3/02; G06N 20/00

(86) International application number:
**PCT/CN2023/135964**

(87) International publication number:
**WO 2024/131504 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.12.2022 CN 202211669393
27.03.2023 CN 202310334065

(71) Applicant: **Huawei Technologies Co., Ltd.**
**Shenzhen, Guangdong 518129 (CN)**

(72) Inventors:
• **OUYANG, Zhongqing**
**Shenzhen, Guangdong 518129 (CN)**

• **SHE, Bin**
**Shenzhen, Guangdong 518129 (CN)**
• **LIU, Yanlin**
**Shenzhen, Guangdong 518129 (CN)**
• **WEI, Fuchun**
**Shenzhen, Guangdong 518129 (CN)**
• **ZHANG, Jingyi**
**Shenzhen, Guangdong 518129 (CN)**
• **WANG, Yongzhong**
**Shenzhen, Guangdong 518129 (CN)**
• **XU, Xiaoxin**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR ACQUIRING CLUSTER CONFIGURATION INFORMATION, AND STORAGE MEDIUM**

(57)    A method and an apparatus for obtaining cluster configuration information, and a storage medium are disclosed. The method includes: obtaining M pieces of first cluster configuration information, where M is an integer greater than 1, each piece of first cluster configuration information is used for describing a configuration solution for constructing a cluster, and the cluster is used for an AI application; obtaining, based on the AI application and the M pieces of first cluster configuration information, M pieces of first application feature information respectively corresponding to the M pieces of first cluster configuration information, where each piece of first application feature information includes description information of a plurality of operators in the AI application and a dependency relationship between the plurality of operators; obtaining, based on the M pieces of first application feature information, running latencies of running the AI application by M clusters, where the M clusters are in one-to-one correspondence with the M pieces of first cluster configuration information; and selecting, from the M pieces of first cluster configuration information, corresponding first cluster configuration information whose running latency satisfies a first condition. Therefore, cluster resource utilization and performance of running the AI application are improved.

**(Cont. next page)**

100

| Mutate software configuration information and/or hardware configuration information included in the selected first cluster configuration information, to obtain a plurality of pieces of first cluster configuration information |
|---|

105

| Obtain a plurality of pieces of first cluster configuration information |
|---|

101

| Obtain, based on an AI application and the plurality of pieces of first cluster configuration information, a plurality of pieces of application feature information respectively corresponding to the plurality of pieces of first cluster configuration information |
|---|

102

| Obtain, based on the plurality of pieces of application feature information, running latencies of running the first AI application by a plurality of clusters, where the plurality of clusters are in one-to-one correspondence with the plurality of pieces of first cluster configuration information |
|---|

103

Selected first cluster configuration information

| Select, from the plurality of pieces of first cluster configuration information, corresponding first cluster configuration information whose running latency satisfies a first condition |
|---|

104

Target cluster configuration information

FIG. 1

## Description

This application claims priorities to Chinese Patent Application No. 202211669393.6, filed on December 24, 2022 and entitled "METHOD FOR CONSTRUCTING COMPUTING CLUSTER", and to Chinese Patent Application No. 202310334065.9, filed on March 27, 2023 and entitled "METHOD AND APPARATUS FOR OBTAINING CLUSTER CONFIGURATION INFORMATION, AND STORAGE MEDIUM", both of which are incorporated herein by reference in their entireties.

## TECHNICAL FIELD

This application relates to the computer field, and in particular, to a method and an apparatus for obtaining cluster configuration information, and a storage medium.

## BACKGROUND

As the scale of an artificial intelligence (artificial intelligence, AI) application becomes larger, a cluster can be used to run the AI application. The cluster is a collection of computing, storage, and communication resources, and includes a plurality of devices. To construct a cluster, cluster configuration information may be obtained based on a to-be-run AI application. The cluster configuration information is used for describing a configuration solution for constructing the cluster. The cluster configuration information includes information such as a quantity of devices in the cluster, a quantity of processors included in the device in the cluster, and/or a parallel running mode used by the AI application. The cluster is constructed with reference to the cluster configuration information. For example, if a cluster used to train an AI model in an AI application needs to be constructed, cluster configuration information may be obtained based on the AI application, and the cluster used to train the AI model in the AI application is constructed based on the cluster configuration information.

In a related technology, a process of obtaining cluster configuration information is: compiling an AI application to obtain instructions included in the AI application; manually selecting at least one key instruction segment from the instructions included in the application, where any key instruction segment includes at least one consecutive instruction, and the any key instruction segment is used for implementing one function in the AI application; estimating, through an emulator based on the at least one key instruction segment, a running latency of running the at least one key instruction segment; and estimating, by a technical expert, the cluster configuration information based on the running latency of the at least one key instruction segment.

In the related technology, the cluster is constructed based on the estimated cluster configuration information. Running the AI application by using the cluster may have a problem of low cluster resource utilization or poor AI application running performance.

## SUMMARY

This application provides a method and an apparatus for obtaining cluster configuration information, and a storage medium, to improve cluster resource utilization and performance of running an AI application. The technical solutions are as follows.

According to a first aspect, this application provides a method for obtaining cluster configuration information. In the method, M pieces of first cluster configuration information are obtained, where M is an integer greater than 1, each piece of first cluster configuration information is used for describing a configuration solution for constructing a cluster, and the cluster is configured to run an artificial intelligence AI application. M pieces of first application feature information respectively corresponding to the M pieces of first cluster configuration information are obtained based on the AI application and the M pieces of first cluster configuration information, where each piece of first application feature information includes description information of a plurality of operators in the AI application and a dependency between the plurality of operators. Running latencies of running the AI application by M clusters are obtained based on the M pieces of first application feature information, where the M clusters are in one-to-one correspondence with the M pieces of first cluster configuration information. Corresponding first cluster configuration information whose running latency satisfies a first condition is selected from the M pieces of first cluster configuration information.

During the obtaining of the running latencies of the AI application, because the AI application is used, to be specific, the M pieces of first application feature information respectively corresponding to the M pieces of first cluster configuration information are obtained based on the AI application and the M pieces of first cluster configuration information, and the running latencies of running the AI application by the M clusters are obtained based on the M pieces of first application feature information, a running latency of running the AI application by each cluster can be accurately obtained. The corresponding first cluster configuration information whose running latency satisfies the first condition is selected from the M pieces of first cluster configuration information, the selected cluster configuration information is used to construct a cluster, and the constructed cluster is used to run the AI application, so that cluster resource utilization and performance of running the AI application can be improved.

In a possible implementation, each piece of first cluster configuration information includes software configuration information and hardware configuration information. The cluster configuration information selected in such a way includes software configuration information and hardware configuration information, and software and hardware of the cluster may be respectively configured based on the software configuration information and the hardware configuration information included in the selected cluster configuration information.

In another possible implementation, software configuration information of the M pieces of first cluster configuration information is selected from a software configuration information range, and/or hardware configuration information of the M pieces of first cluster configuration information is selected from a hardware configuration information range, so that the M pieces of first cluster configuration information are successfully obtained.

In another possible implementation, a quantity of pieces of corresponding selected first cluster configuration information whose running latency satisfies the first condition is N, and N is an integer greater than or equal to 1 and less than M. Software configuration information and/or hardware configuration information included in the N pieces of first cluster configuration information are/is mutated, to obtain Z pieces of second cluster configuration information, where Z is an integer greater than N. Second application feature information respectively corresponding to the Z pieces of second cluster configuration information is obtained based on the AI application and the Z pieces of second cluster configuration information. Running latencies of running the AI application by Z clusters are obtained based on Z pieces of second application feature information, where the Z clusters are in one-to-one correspondence with the Z pieces of second cluster configuration information. Corresponding second cluster configuration information whose running latency satisfies the first condition is selected from the Z pieces of second cluster configuration information. In this way, content of the selected first cluster configuration information may be constantly mutated to obtain new first cluster configuration information, and relatively good cluster configuration information and cluster configuration information that can greatly improve cluster resource utilization and cluster configuration information performance of running the AI application are selected from the new first cluster configuration information.

In another possible implementation, the software configuration information includes one or more of the following: a parallel running mode used by the AI application, a ratio of a quantity of devices used by the AI application to a quantity of devices included in the cluster, or a scheduling mode used by the cluster to run the AI application.

In another possible implementation, the hardware configuration information includes one or more of the following: a quantity of devices included in the cluster, a quantity of processors included in the device in the cluster, a ratio between different types of processors included in the device in the cluster, a memory parameter included in the device in the cluster, a bandwidth of the device in the cluster, or a hard disk parameter included in the device in the cluster.

In another possible implementation, an intermediate representation IR graph corresponding to each piece of first cluster configuration information is obtained based on program code of the AI application and each piece of first cluster configuration information. The IR graph corresponding to each piece of first cluster configuration information is parsed, to obtain first application feature information corresponding to each piece of first cluster configuration information. Because the IR graph corresponding to each piece of first cluster configuration information can be obtained, it is ensured that the first application feature information corresponding to each piece of first cluster configuration information can be successfully obtained by parsing each IR graph.

In another possible implementation, for each piece of first application feature information, running latencies of a plurality of operators are obtained based on description information of the plurality of operators included in the first application feature information. A running latency of the AI application is obtained based on the running latencies of the plurality of operators and a dependency between the plurality of operators. Because the running latencies of the plurality of operators are obtained based on the first application feature information, the running latency of the AI application can be accurately obtained based on the running latencies of the plurality of operators and the dependency between the plurality of operators, thereby improving precision of obtaining the running latency of the AI application.

In another possible implementation, the plurality of operators include a calculation operator. A running latency of the calculation operator is obtained based on a running latency obtaining model and description information of the calculation operator. Because running efficiency of the running latency obtaining model is high, a running latency of each calculation operator in the AI application can be quickly obtained based on the running latency obtaining model without affecting efficiency of obtaining the cluster configuration information, and the running latency of the AI application is obtained based on the running latency of each calculation operator, so that information used for obtaining the running latency of the AI application is enriched, thereby improving precision of obtaining the running latency of the AI application.

In another possible implementation, model training is performed based on at least one training sample to obtain the running latency obtaining model, where any one of the at least one training sample includes description information of at least one calculation operator in another AI application and a running latency of running the another AI application. Because the training sample includes the description information of at least one calculation operator in the another AI application and the running latency of running the another AI application, a running latency obtaining model having a running latency obtaining function can be obtained based on the training sample. In this way, when the cluster configuration information of the cluster configured to run the AI application is obtained, the running latencies of the plurality of operators in the AI application may be obtained based on the running latency obtaining model.

In another possible implementation, the plurality of operators include a calculation operator. A running latency of the calculation operator is obtained based on device information of a first device and description information of the calculation operator according to a first latency obtaining formula, where the first device is a device included in the cluster. Because the running latency of the calculation operator can be quickly obtained based on the first latency obtaining formula, a running latency of each calculation operator in the AI application can be quickly obtained based on the first latency obtaining formula without affecting efficiency of obtaining the cluster configuration information, and the running latency of the AI application is obtained based on the running latency of each calculation operator, so that information used for obtaining the running latency of the AI application is enriched, thereby improving precision of obtaining the running latency of the AI application.

In another possible implementation, a running latency of running a calculation operator included in another AI application by a second device is obtained, where the second device is a device in a constructed cluster configured to run the another AI application. Description information of the calculation operator in the another AI application is obtained based on program code of the another AI application and cluster configuration information of the cluster running the another AI application. A second latency obtaining formula is established based on device information of the second device, the description information of the calculation operator in the another AI application, and the running latency of the calculation operator included in the another AI application. The first latency obtaining formula is obtained based on a first coefficient and the second latency obtaining formula, where the first coefficient indicates a performance difference between the first device and the second device.

For the second device included in the constructed cluster configured to run the another AI application, the second device runs the calculation operator in the another AI application to obtain the running latency of the calculation operator in the another AI application. The second latency obtaining formula is established based on the device information of the second device, the description information of the calculation operator in the another AI application, and the running latency of the calculation operator in the another AI application. The second latency obtaining formula is used for obtaining the running latency of the calculation operator in the another AI application. The second latency obtaining formula is transformed based on the first coefficient used for reflecting the performance difference between the first device and the second device, so that the first latency obtaining formula can be accurately obtained.

In another possible implementation, the running latency of the calculation operator includes a calculation latency needed by the calculation operator to perform data calculation, and/or a read and write latency needed by the calculation operator to perform data reading and writing. The information used for obtaining the running latency of the AI application is enriched, so that precision of obtaining the running latency of the AI application can be improved based on the calculation latency and the read and write latency of the calculation operator.

In another possible implementation, the plurality of operators further include a communication operator. A running latency of the communication operator is obtained based on a communication simulator, the first cluster configuration information corresponding to the first application feature information, and description information of the communication operator, where the communication simulator is configured to simulate a running process of the communication operator. In this way, a running latency of each operator in the AI application can be obtained, and the information used for obtaining the running latency of the AI application is enriched, so that precision of obtaining the running latency of the AI application based on the running latencies of the operators in the AI application is improved.

In another possible implementation, the description information of the calculation operator includes one or more of the following: a quantity of pieces of data that needs to be calculated by the calculation operator, a quantity of pieces of data that needs to be read and written by the calculation operator, a data format of the data that needs to be calculated by the calculation operator, a data type of the data that needs to be calculated by the calculation operator, a data format of the data that needs to be read and written by the calculation operator, or a data type of the data that needs to be read and written by the calculation operator. In this way, the description information of the calculation operator is enriched, so that precision of obtaining the running latency of the calculation operator can be improved.

In another possible implementation, the description information of the communication operator includes one or more of the following: an amount of data that needs to be communicated by the communication operator, a communication algorithm used by the communication operator, or a communication domain of the communication operator. In this way, the description information of the communication operator is enriched, so that precision of obtaining the running latency of the communication operator can be improved.

According to a second aspect, this application provides an apparatus for obtaining cluster configuration information, to perform the method according to any one of the first aspect or the possible implementations of the first aspect. Specifically, the apparatus includes units configured to perform the method according to any one of the first aspect or the possible implementations of the first aspect.

According to a third aspect, this application provides an apparatus for obtaining cluster configuration information, including at least one processor and a memory. The at least one processor is configured to: be coupled to the memory, and read and execute instructions in the memory, to enable the apparatus to implement the method according to any one of the first aspect or the possible implementations of the first aspect.

According to a fourth aspect, this application provides a computer program product. The computer program product includes a computer program stored in a computer-readable storage medium, and the computer program is loaded by a computer to enable the computer to implement the method according to any one of the first aspect or the possible implementations of the first aspect.

According to a fifth aspect, this application provides a computer-readable storage medium, configured to store a computer program. When the computer program is executed by a computer, the computer is enabled to perform the method according to any one of the first aspect or the possible implementations of the first aspect.

According to a sixth aspect, this application provides a chip, including a memory and a processor. The memory is configured to store computer instructions, and the processor is configured to invoke the computer instructions from the memory and run the computer instructions, to perform the method according to any one of the first aspect or the possible implementations of the first aspect.

## BRIEF DESCRIPTION OF DRAWINGS

FIG. 1 is a flowchart of a method for obtaining cluster configuration information according to an embodiment of this application;
FIG. 2 is a diagram of a structure of a cluster according to an embodiment of this application;
FIG. 3 is a flowchart of a method for training a latency obtaining model according to an embodiment of this application;
FIG. 4 is a flowchart of a method for establishing a latency obtaining formula according to an embodiment of this application;
FIG. 5 is a diagram of a structure of an apparatus for obtaining cluster configuration information according to an embodiment of this application; and
FIG. 6 is a diagram of a structure of a device according to an embodiment of this application.

## DESCRIPTION OF EMBODIMENTS

The following further describes in detail embodiments of this application with reference to accompanying drawings.

Cluster configuration information is used for describing a configuration solution for constructing a cluster, and the cluster is configured to run an AI application. The cluster configuration information includes software configuration information and hardware configuration information. Before the cluster is constructed, target cluster configuration information used for constructing the cluster is obtained based on a to-be-run AI application, and then the cluster is constructed with reference to the target cluster configuration information. For ease of subsequent description, the to-be-run AI application is referred to as a first AI application.

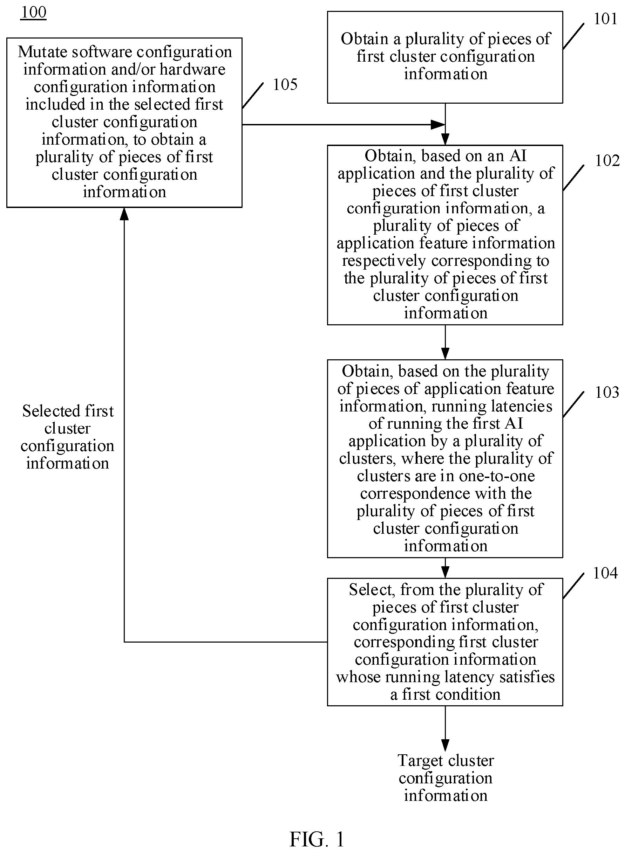

Refer to FIG. 1. An embodiment of this application provides a method 100 for obtaining cluster configuration information. The method 100 may be performed by a terminal device, a server, a cloud platform, or the like. The method 100 includes the following steps:

Step 101: Obtain a plurality of pieces of first cluster configuration information.

Step 102: Obtain, based on a first AI application and the plurality of pieces of first cluster configuration information, a plurality of pieces of application feature information respectively corresponding to the plurality of pieces of first cluster configuration information, where each piece of application feature information includes description information of a plurality of operators in the first AI application and a dependency between the plurality of operators.

Step 103: Obtain, based on the plurality of pieces of application feature information, running latencies of running the first AI application by a plurality of clusters, where the plurality of clusters are in one-to-one correspondence with the plurality of pieces of first cluster configuration information.

Step 104: Select, from the plurality of pieces of first cluster configuration information, corresponding first cluster configuration information whose running latency satisfies a first condition.

Step 105: Mutate software configuration information and/or hardware configuration information included in the selected first cluster configuration information, to obtain a plurality of pieces of first cluster configuration information, and return to step 102 to perform a next round of selecting cluster configuration information. It should be understood that, in some other embodiments, the cluster configuration information obtained by mutating the software configuration information and/or the hardware configuration information included in the selected first cluster configuration information in step 105 may be renamed second cluster configuration information, to reflect entering a new cycle. In this application, the first cluster configuration information and the second cluster configuration information are only used for indicating cluster configuration information constructed for a same cluster in different quantities of cycles.

In step 104, if the running latency corresponding to the selected first cluster configuration information does not exceed a latency threshold, target cluster configuration information is obtained based on the selected first cluster configuration information, and the process ends; or if the running latency corresponding to the selected first cluster configuration information exceeds a latency threshold, an operation of step 105 continues to be performed.

Alternatively, if the quantity of cycles of the foregoing method 100 exceeds a quantity threshold, target cluster configuration information is obtained based on the selected first cluster configuration information, and the process ends; or if the quantity of cycles of the foregoing method 100 does not exceed a quantity threshold, an operation of step 105 continues to be performed.

The target cluster configuration information is one piece of cluster configuration information in the selected first cluster configuration information.

In some embodiments, the software configuration information includes one or more of the following: a parallel running mode used by the first AI application, a ratio of a quantity of devices used by the first AI application to a quantity of devices included in a cluster, a scheduling mode used by the cluster to run the first AI application, or the like.

In some embodiments, the hardware configuration information includes one or more of the following: a quantity of devices included in a cluster, a quantity of processors included in the device in the cluster, a ratio between different types of processors included in the device in the cluster, a memory parameter (for example, a memory size) included in the device in the cluster, a bandwidth of the device in the cluster, a hard disk parameter (for example, a hard disk storage capacity or a hard disk read and write bandwidth) included in the device in the cluster, or the like. Optionally, the processor includes one or more types of the following: a central processing unit (central processing unit, CPU), a graphics processing unit (graphics processing unit, GPU), a data processing unit (data processing unit, DPU), a network processing unit (network processing unit, NPU), or the like.

A cluster 200 may be constructed with reference to software configuration information and hardware configuration information that are included in the target cluster configuration information.

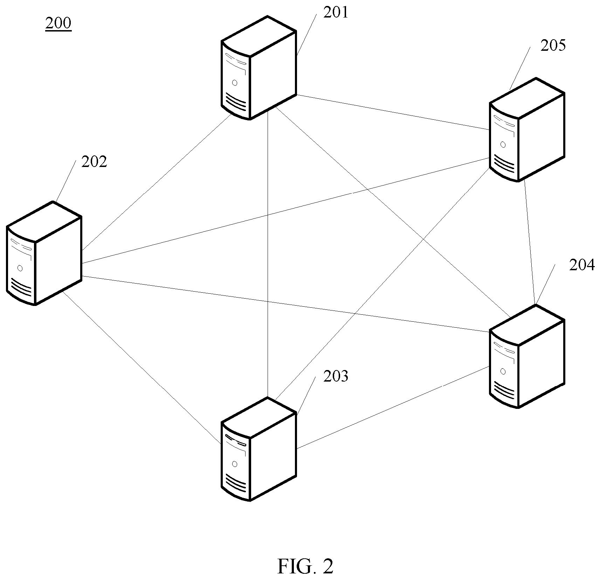

Refer to FIG. 2. The constructed cluster 200 includes a plurality of devices, and the plurality of devices may communicate with each other and cooperate with each other to run the first AI application. Optionally, the first AI application may be an untrained AI model or a trained AI model.

For example, refer to the cluster 200 shown in FIG. 2. The cluster 200 includes five devices. The five devices are a device 201, a device 202, a device 203, a device 204, and a device 205, and the five devices may be configured to run the first AI application.

Optionally, the plurality of devices may be servers, boards, chips, terminal devices, or the like.

In some embodiments, if the first AI application is an untrained AI model, running the first AI application by the cluster 200 may be: training the AI model by the cluster 200 to obtain an application having a function.

After the application is obtained through training, a terminal device, a server, or another cluster is used to run the application having the function.

In some embodiments, the AI model may be a convolutional neural network or the like. Currently, a plurality of different convolutional neural networks exist, structures of the plurality of convolutional neural networks are different, and/or parameters of the plurality of convolutional neural networks are different. The AI model may be a convolutional neural network in the plurality of convolutional neural networks.

For example, it is assumed that a dialog language application having a dialog function needs to be trained, and the cluster 200 is used to train an AI model to obtain the dialog language application having the dialog function. Then, the terminal device or the server is used to run the language dialog application. The terminal device may be a computer, a mobile phone, or the like.

If the first AI application is a trained AI model, the first AI application is an application having a function, and can provide a service for a user, the cluster 200 runs the first AI application, and can provide the service for the user.

There are a plurality of cyclic manners of the method 100. The following lists the following three cyclic manners. For detailed descriptions of the three manners, refer to the following Manner 1, Manner 2, and Manner 3.

Manner 1: In each cycle of the method 100, the software configuration information in the selected first cluster configuration information may be mutated, but the hardware configuration information in the selected first cluster configuration information is not mutated. In this way, the software configuration information in the first cluster configuration information obtained in each cycle constantly changes, and the hardware configuration information remains unchanged.

Because the hardware configuration information in the first cluster configuration information obtained in each cycle remains unchanged, but the software configuration information in the first cluster configuration information is mutated, an amount of data that needs to be processed in each cycle can be reduced, and software configuration information used for improving efficiency of running the first AI application by the cluster and resource utilization can be quickly obtained, in other words, locally relatively good software configuration information can be quickly obtained.

At the beginning of the first cycle, a plurality of pieces of first cluster configuration information are obtained through the foregoing step 101, and a quantity of pieces of the obtained first cluster configuration information is M. In other words, in the foregoing step 101, M pieces of first cluster configuration information are obtained, where M is an integer greater than 1.

During implementation, an operation of obtaining the M pieces of first cluster configuration information may be: selecting software configuration information of the M pieces of first cluster configuration information from a software configuration information range. Any one of the M pieces of first cluster configuration information includes initial hardware configuration information and software configuration information that is in the any one piece of first cluster configuration information. The software configuration information range includes a plurality of pieces of different software configuration information.

In some embodiments, M pieces of software configuration information are randomly selected from the software configuration information range, to obtain the software configuration information of the M pieces of first cluster configuration information, where the M pieces of software configuration information are evenly distributed in the software configuration information range.

In some embodiments, the initial hardware configuration information is one piece of hardware configuration information in a hardware configuration information range. The hardware configuration information range includes a plurality of pieces of different hardware configuration information.

In some embodiments, software configuration information included in each of the M pieces of first cluster configuration information is different. Initial hardware configuration information included in each piece of first cluster configuration information may be the same or different, or initial hardware configuration information included in some of the M pieces of first cluster configuration information is the same.

In some embodiments, the software configuration information range includes one or more of the following ranges: a parallel running mode range, a device ratio range, a scheduling mode range, or the like.

The parallel running mode range includes at least one parallel running mode. Optionally, the at least one parallel running mode includes one or more of the following: data parallel (data parallel, DP), model parallel (model parallel, MP), pipeline (pipeline), mixture-of-experts (mixture-of-experts, MoE), or the like.

The device ratio range includes at least one device ratio, and any device ratio in the device ratio range is a ratio of a quantity of devices used by the first AI application to a quantity of devices included in a cluster.

The scheduling mode range includes at least one scheduling mode. The scheduling mode in the scheduling mode range is a scheduling mode that may be used by the cluster to run the first AI application.

In some embodiments, an operation of selecting the software configuration information from the software configuration information range is: selecting a parallel running mode from the parallel running mode range, selecting a device ratio from the device ratio range, and/or selecting a scheduling mode from the scheduling mode range. The selected software configuration information includes the selected parallel running mode, device ratio, and/or scheduling mode.

In some embodiments, the hardware configuration information range includes one or more of the following ranges: a device quantity range, a processor quantity range, a memory parameter range, a bandwidth range, a hard disk parameter range, a processor ratio range, a network topology range, or the like.

The device quantity range includes at least one quantity of devices, and any quantity of devices that is in the device quantity range is a quantity of devices included in the cluster.

The processor quantity range includes at least one quantity of processors, and any quantity of processors that is in the processor quantity range is a quantity of processors included in a device in the cluster.

The memory parameter range includes at least one memory parameter, and any memory parameter in the memory parameter range is a parameter of a memory included in a device in the cluster.

The bandwidth range includes at least one bandwidth size, and any bandwidth size in the bandwidth range is a bandwidth size of any device in the cluster.

The hard disk parameter range includes at least one hard disk parameter, and any hard disk parameter in the hard disk parameter range is a parameter of a hard disk included in a device in the cluster.

The processor ratio range includes at least one processor ratio, and any processor ratio in the processor ratio range may be a ratio between different types of processors (for example, a ratio of CPUs to GPUs) included in a device in the cluster.

The network topology range includes at least one network topology.

In some embodiments, for the initial hardware configuration information, a quantity of devices is selected from the device quantity range, a quantity of processors is selected from the processor quantity range, a memory parameter is selected from the memory parameter range, a bandwidth size is selected from the bandwidth size range, a hard disk parameter is selected from the hard disk parameter range, a processor ratio is selected from the processor ratio range, and/or a network topology is selected from the network topology range. The initial hardware configuration information includes the selected quantity of devices, quantity of processors, memory parameter, bandwidth size, hard disk parameter, processor ratio, network topology, and/or the like.

In some embodiments, an initial value of a first quantity of cycles is initialized in the first cycle. Each time when the process returns to step 102, the first quantity of cycles is increased. For example, each time when the process returns to step 102, the first quantity of cycles is increased by 1.

In the foregoing step 104, a quantity of pieces of corresponding selected first cluster configuration information whose running latency satisfies the first condition is N, where N is an integer greater than or equal to 1 and less than M.

When the foregoing step 104 is performed, if the first quantity of cycles does not exceed a first quantity threshold, step 105 is performed, or if the first quantity of cycles exceeds a first quantity threshold, the process ends. Alternatively, if none of running latencies corresponding to the N pieces of selected first cluster configuration information is less than a first latency threshold, step 105 is performed, or if running latencies corresponding to the N pieces of selected first cluster configuration information are all less than a first latency threshold, the process ends.

In some embodiments, the foregoing latency threshold includes the first latency threshold, and the foregoing quantity threshold includes the first quantity threshold.

In the foregoing step 105, software configuration information included in the N pieces of first cluster configuration information is mutated to obtain software configuration information in Z pieces of second cluster configuration information, where Z is an integer greater than N, and any one of the Z pieces of second cluster configuration information includes initial hardware configuration information and software configuration information in the any one piece of second cluster configuration information. Then, the Z pieces of second cluster configuration information are used as Z pieces of first cluster configuration information, and an operation of step 102 is performed on the Z pieces of first cluster configuration information.

In some embodiments, an operation of obtaining the Z pieces of second cluster configuration information is:

for any one of the N pieces of first cluster configuration information, all or some content in software configuration information included in the any one piece of cluster configuration information is mutated, to obtain at least one piece of software configuration information. The at least one piece of software configuration information is in one-to-one correspondence with at least one piece of second cluster configuration information, and any one of the at least one piece of second cluster configuration information includes software configuration information corresponding to the any one piece of second cluster configuration information and hardware configuration information in the any one piece of first cluster configuration information.

In some embodiments, an operation of mutating the software configuration information included in the any one piece of first cluster configuration information may be: modifying all or some content in the software configuration information included in the any one piece of first cluster configuration information, to obtain at least one piece of software configuration information.

For example, for the software configuration information included in the any one piece of first cluster configuration information, it is assumed that a device ratio included in the software configuration information is 0.8, and the device ratio in the software configuration information is modified from 0.8 to 0.9, to obtain one piece of software configuration information. The software configuration information obtained after the modification includes the device ratio of 0.9 and content other than the device ratio in the software configuration information before the modification.

In some embodiments, the operation of mutating the software configuration information included in the any one piece of first cluster configuration information may be: replacing some content in the software configuration information included in the any one piece of first cluster configuration information with some content in software configuration information included in another piece of first cluster configuration information, to obtain one piece of software configuration information. The N pieces of first cluster configuration information include the another piece of first cluster configuration information.

For example, the N pieces of first cluster configuration information include first cluster configuration information 1 and first cluster configuration information 2, a device ratio in software configuration information 1 included in the first cluster configuration information 1 is 0.8, and a device ratio in software configuration information 2 included in the second cluster configuration information 2 is 0.9. The device ratio of 0.8 in the software configuration information 1 is replaced with the device ratio of 0.9 in the software configuration information 2, to obtain one piece of software configuration information. The software configuration information includes the device ratio of 0.9 and content other than the device ratio in the software configuration information 1.

Manner 2: In each cycle of the method 100, the hardware configuration information in the selected first cluster configuration information may be mutated, but the software configuration information in the selected first cluster configuration information is not mutated. In this way, the hardware configuration information in the first cluster configuration information obtained in each cycle constantly changes, and the software configuration information remains unchanged.

Because the software configuration information in the first cluster configuration information obtained in each cycle remains unchanged, but the hardware configuration information in the first cluster configuration information is mutated, an amount of data that needs to be processed in each cycle can be reduced, and hardware configuration information used for improving efficiency of running the first AI application by the cluster and resource utilization can be quickly obtained, in other words, locally relatively good hardware configuration information can be quickly obtained.

In the first cycle of Manner 2, a plurality of pieces of first cluster configuration information are obtained through the foregoing step 101, and a quantity of pieces of the obtained first cluster configuration information is M. In other words, in the foregoing step 101, M pieces of first cluster configuration information are obtained.

During implementation, an operation of obtaining the M pieces of first cluster configuration information is: selecting hardware configuration information of the M pieces of first cluster configuration information from the hardware configuration information range. Any one of the M pieces of first cluster configuration information includes initial software configuration information and hardware configuration information that is in the any one piece of first cluster configuration information. The initial software configuration information is one piece of software configuration information in the software configuration information range.

Alternatively, after a cyclic process of Manner 1 is performed, a cyclic process of Manner 2 is performed. An operation of obtaining the M pieces of first cluster configuration information is: selecting hardware configuration information of the M pieces of first cluster configuration information from the hardware configuration information range, where any one of the M pieces of first cluster configuration information includes software configuration information in second cluster configuration information and hardware configuration information in the any one piece of first cluster configuration information, and the second cluster configuration information is corresponding cluster configuration information that is selected last time and whose running latency satisfies the first condition.

The second cluster configuration information is one of the N pieces of first cluster configuration information that are selected in the last cycle in Manner 1.

In some embodiments, M pieces of software configuration information are randomly selected from the hardware configuration information range, and the M pieces of software configuration information are used as hardware configuration information of the M pieces of first cluster configuration information, where the M pieces of hardware configuration information are evenly distributed in the hardware configuration information range. One piece of software configuration information is selected from the software configuration information included in the N pieces of first cluster configuration information, and the selected one piece of hardware configuration information and the selected one piece of software configuration information form one piece of first cluster configuration information. The foregoing process of forming the first cluster configuration information is repeated, to obtain the M pieces of first cluster configuration information.

In some embodiments, an initial value of a second quantity of cycles is initialized in the first cycle. Each time when the process returns to step 102, the second quantity of cycles is increased.

In the foregoing step 104, a quantity of pieces of selected first cluster configuration information is N, where N is an integer greater than or equal to 1 and less than M.

When the foregoing step 104 is performed, if the second quantity of cycles does not exceed a second quantity threshold, step 105 is performed, or if the second quantity of cycles exceeds a second quantity threshold, the process ends. Alternatively, if none of running latencies corresponding to the N pieces of selected first cluster configuration information is less than a second latency threshold, step 105 is performed, or if running latencies corresponding to the N pieces of selected first cluster configuration information are all less than a second latency threshold, the process ends. The second latency threshold may be less than or equal to the first latency threshold.

In some embodiments, the foregoing latency threshold includes the second latency threshold, and the foregoing quantity threshold includes the second quantity threshold. The first quantity threshold may be equal to or not equal to the second quantity threshold.

In the foregoing step 105, hardware configuration information included in the N pieces of first cluster configuration information is mutated to obtain hardware configuration information in Z pieces of second cluster configuration information, where Z is an integer greater than N, any one of the Z pieces of second cluster configuration information includes software configuration information in one piece of first cluster configuration information and hardware configuration information in the any one piece of second cluster configuration information, and the N pieces of first cluster configuration information include the one piece of first cluster configuration information. Then, the Z pieces of second cluster configuration information are used as Z pieces of first cluster configuration information, and an operation of step 102 is performed on the Z pieces of first cluster configuration information.

In some embodiments, an operation of obtaining the Z pieces of second cluster configuration information is:

for any one of the N pieces of first cluster configuration information, all or some content in hardware configuration information included in the any one piece of first cluster configuration information is mutated, to obtain at least one piece of hardware configuration information. The at least one piece of hardware configuration information is in one-to-one correspondence with at least one piece of second cluster configuration information, and any one of the at least one piece of second cluster configuration information includes software configuration information in the any one piece of first cluster configuration information and one piece of hardware configuration information corresponding to the any one piece of second cluster configuration information.

In some embodiments, an operation of mutating all or some content in the hardware configuration information included in the any one piece of first cluster configuration information may be: modifying all or some content in the hardware configuration information included in the any one piece of first cluster configuration information, to obtain at least one piece of hardware configuration information.

For example, for the hardware configuration information included in the any one piece of first hardware configuration information, it is assumed that a quantity of devices that is included in the hardware configuration information is 80, and the quantity of devices that is in the hardware configuration information is modified from 80 to 90, to obtain one piece of hardware configuration information. The hardware configuration information obtained after the modification includes the quantity 90 of devices and content other than the quantity of devices in the hardware configuration information before the modification.

In some embodiments, the operation of mutating all or some content in the hardware configuration information included in the any one piece of first cluster configuration information may be: replacing some content in the hardware configuration information included in the any one piece of first cluster configuration information with some content in hardware configuration information included in another piece of first cluster configuration information, to obtain one piece of hardware configuration information. The N pieces of first cluster configuration information include the another piece of first cluster configuration information.

For example, the N pieces of first cluster configuration information include first cluster configuration information 1 and first cluster configuration information 2, a quantity of devices that is in hardware configuration information 1 included in the first cluster configuration information 1 is 80, and a quantity of devices that is in hardware configuration information 2 included in the first cluster configuration information 2 is 90. The quantity 80 of devices that is in the hardware configuration information 1 is replaced with the quantity "90" of devices that is in the hardware configuration information 2, to obtain one piece of hardware configuration information. The hardware configuration information includes the quantity 90 of devices and content other than the quantity of devices in the hardware configuration information 1.

In some embodiments, the cyclic process of Manner 2 may be performed first, and after the cyclic process of Manner 2 is performed, the cyclic process of Manner 1 is performed.

Manner 3: In each cycle of the method 100, the software configuration information and the hardware configuration information in the selected first cluster configuration information may be mutated, so that the software configuration information and the hardware configuration information in the first cluster configuration information obtained in each cycle constantly change.

In some embodiments, in the first cycle of Manner 3, a plurality of pieces of first cluster configuration information are obtained through the foregoing step 101, and a quantity of pieces of the obtained first cluster configuration information is M.

During implementation, an operation of obtaining the M pieces of first cluster configuration information is: selecting software configuration information of the M pieces of first cluster configuration information from the software configuration information range, and selecting hardware configuration information of the M pieces of first cluster configuration information from the hardware configuration information range, to obtain the M pieces of first cluster configuration information.

Alternatively, before a cyclic process of Manner 3 is performed, the cyclic process of Manner 1 or the cyclic process of Manner 2 is first performed. The operation of obtaining the M pieces of first cluster configuration information is: for at least one piece of corresponding first cluster configuration information that is selected in the cyclic process of Manner 1 or the cyclic process of Manner 2 in the last cycle and whose running latency satisfies the first condition, software configuration information included in the at least one piece of first cluster configuration information is mutated, to obtain software configuration information of the M pieces of first cluster configuration information; and hardware configuration information included in the at least one piece of first cluster configuration information is mutated, to obtain hardware configuration information of the M pieces of first cluster configuration information, so as to obtain the M pieces of first cluster configuration information.

Before the cyclic process of Manner 3 is performed, the cyclic process of Manner 1 or the cyclic process of Manner 2 is first performed. In this way, any one of the at least one piece of first cluster configuration information can greatly improve efficiency of running the first AI application by the cluster and resource utilization. Based on the at least one piece of first cluster configuration information, target cluster configuration information that can further improve the efficiency of running the first AI application by the cluster and the resource utilization can be quickly obtained in Manner 3.

In some embodiments, an initial value of a third quantity of cycles is initialized in the first cycle. Each time the process returns to step 102, the third quantity of cycles is increased.

In the foregoing step 104, a quantity of pieces of selected first cluster configuration information is N, where N is an integer greater than or equal to 1 and less than M.

When the foregoing step 104 is performed, if the third quantity of cycles does not exceed a third quantity threshold, step 105 is performed, or if the third quantity of cycles exceeds a third quantity threshold, the process ends. Alternatively, if none of running latencies corresponding to the N pieces of selected first cluster configuration information is less than a third latency threshold, step 105 is performed, or if running latencies corresponding to the N pieces of selected first cluster configuration information are all less than a third latency threshold, the process ends. The third latency threshold may be less than or equal to the first latency threshold, and the third latency threshold may be less than or equal to the second latency threshold.

In some embodiments, the foregoing latency threshold includes the third latency threshold, and the foregoing quantity threshold includes the third quantity threshold. The first quantity threshold may be equal to or not equal to the third quantity threshold, and the second quantity threshold may be equal to or not equal to the third quantity threshold.

In the foregoing step 105, the software configuration information included in the N pieces of first cluster configuration information is mutated, to obtain the software configuration information of the M pieces of first cluster configuration information; and the hardware configuration information included in the N pieces of first cluster configuration information is mutated, to obtain the hardware configuration information of the M pieces of first cluster configuration information, so as to obtain the M pieces of first cluster configuration information. Then, the operation of step 102 is performed on the M pieces of first cluster configuration information.

In some embodiments, if the third quantity of cycles exceeds the third quantity threshold, or if the running latencies corresponding to the N pieces of selected first cluster configuration information are all less than the third latency threshold, the N pieces of selected first cluster configuration information are displayed to the user, and the user selects one piece of cluster configuration information from the N pieces of first cluster configuration information as the target cluster configuration information. Alternatively, corresponding first cluster configuration information whose running latency is the smallest is selected from the N pieces of first cluster configuration information as the target cluster configuration information.

In this embodiment of this application, corresponding target cluster configuration information whose running latency is small can be obtained through the cyclic process of Manner 1, the cyclic process of Manner 2, or the cyclic process of Manner 3. In this way, a cluster is constructed based on the target cluster configuration information, and the cluster is used to run the first AI application, so that cluster resource utilization and performance of running the first AI application can be improved.

For the foregoing step 102, the description information of the operator is used for describing data that needs to be processed by the operator, an attribute of the operator, and/or the like. Any one of the plurality of operators is used for implementing one function.

For example, program code of the first AI application includes the following three code statements, the three code statements are used for implementing an addition operation function, and the three code statements are code statements included in an operator used for implementing the addition operation function.

```
def mysum(int a, int b);
int c=a+b;
return c;
```

In some embodiments, the plurality of operators include one or more of the following: a calculation operator or a communication operator The calculation operator is an operator having a calculation function, and the communication operator is an operator having a communication function.

In some embodiments, description information of the calculation operator includes one or more of the following: a quantity of pieces of data that needs to be calculated by the calculation operator, a quantity of pieces of data that needs to be read and written by the calculation operator, a data format of the data that needs to be calculated by the calculation operator, a data type of the data that needs to be calculated by the calculation operator, a data format of the data that needs to be read and written by the calculation operator, or a data type of the data that needs to be read and written by the calculation operator.

The data type may be an integer, a character, a floating point, or the like. The data format may be one-dimensional data, two-dimensional data, three-dimensional data, four-dimensional data, five-dimensional data, or the like. For example, a single image has a length dimensionality, a width dimensionality, and a channel dimensionality, so that the single image is the three-dimensional data.

For example, for the foregoing operator used for implementing the addition operation function, the operator is a calculation operator, and the calculation operator needs to read and write data a and data b, and calculate the data a and the data b. Therefore, a quantity of pieces of data that needs to be calculated by the calculation operator is 2, and a quantity of pieces of data that needs to be read and written is 2. Data types of the data a and the data b are integers. Therefore, the data type of the data that needs to be calculated by the calculation operator is an integer, and the data type of the data that needs to be read and written by the calculation operator is an integer.

In some embodiments, description information of the communication operator includes one or more of the following: an amount of data that needs to be communicated by the communication operator, a communication algorithm corresponding to the communication operator, a communication domain corresponding to the communication operator, or the like.

Optionally, the amount of data that needs to be communicated by the communication operator includes an amount of data that needs to be sent by the communication operator and/or an amount of data that needs to be received by the communication operator.

Optionally, the communication domain corresponding to the communication operator includes inter-device communication, intra-device communication, or the like.

In step 102, the description information of the plurality of operators and the dependency between the plurality of operators may be obtained through the following operations of 1021 and 1022.

1021: For each piece of first cluster configuration information, obtain an intermediate representation (intermediate representation, IR) graph of the first AI application based on the first cluster configuration information and the program code of the first AI application, where the IR graph includes the description information of the plurality of operators in the first AI application and the dependency between the plurality of operators.

In 1021, the IR graph of the first AI application is obtained through an AI framework based on the first cluster configuration information and the program code of the first AI application. The IR graph of the first AI application includes a plurality of nodes, and the plurality of nodes included in the IR graph of the first AI application are in one-to-one correspondence with the plurality of operators. In the IR graph of the first AI application, a node corresponding to any one of the plurality of operators stores description information of the operator. In addition, in the IR graph of the first AI application, for two operators that have a dependency in the plurality of operators, two nodes corresponding to the two operators are connected through an edge.

In some embodiments, the AI framework may be TensorFlow, PyTorch, MindSpore, or any AI framework in the industry.

In some embodiments, the IR graph includes a node corresponding to each of the plurality of operators, in other words, the IR graph includes description information of each operator.

1022: Parse the IR graph of the first AI application to obtain application feature information corresponding to the first cluster configuration information, where the application feature information includes the description information of the plurality of operators and the dependency between the plurality of operators.

For any node in the IR graph of the first AI application, description information of an operator that is stored in the node is read, at least one other node connected to the node is determined from the IR graph of the first AI application, and a dependency between the operator corresponding to the node and an operator corresponding to the at least one other node is obtained based on the at least one other node.

In some embodiments, dependency information of the operator corresponding to the node is obtained based on the at least one other node. The dependency information includes identification information of the operator and identification information of the operator corresponding to the other node. The dependency information is used for describing the dependency. The identification information of the operator may include a name of the operator or a number of the operator.

For the foregoing step 103, for each piece of application feature information, a running latency of an AI application may be obtained based on the application feature information through the following steps 1031 and 1032.

1031: Obtain running latencies of a plurality of operators based on description information of the plurality of operators included in the application feature information.

In some embodiments, the plurality of operators include a calculation operator, and a running latency of the calculation operator may be obtained in 103 1. The running latency of the calculation operator includes one or more of the following: a calculation latency needed by the calculation operator to perform data calculation, a read and write latency needed by the calculation operator to perform data reading and writing, or the like.

In 1031, the running latency of the calculation operator may be obtained in the following two manners, and the two manners are the following Manner 1 and Manner 2.

Manner 1: For any calculation operator included in the plurality of operators, a running latency of the calculation operator is obtained based on a running latency obtaining model and description information of the calculation operator.

In Manner 1, content, such as a quantity of pieces of data that needs to be calculated by the calculation operator, a quantity of pieces of data that needs to be read and written, a data format of the data that needs to be calculated, a data type of the data that needs to be calculated, a data format of the data that needs to be read and written, and/or a data format of the data that needs to be read and written, that is included in the description information of the calculation operator is input into the running latency obtaining model.

In this way, the running latency obtaining model obtains through inference, based on the content, such as the quantity of pieces of data that needs to be calculated by the calculation operator, the quantity of data that needs to be read and written by the calculation operator, the data format of the data that needs to be calculated, the data type of the data that needs to be calculated, the data format of the data that needs to be read and written, and/or the data format of the data that needs to be read and written, that is included in the description information of the calculation operator, the running latency of running the calculation operator, and then the running latency of the calculation operator that is output by the running latency obtaining model is obtained.

For other calculation operators included in the plurality of operators, a running latency of each of the other calculation operators is obtained according to the foregoing process. Because the running latency obtaining model can quickly infer the running latency of the calculation operator based on the description information of the calculation operator, efficiency of obtaining the target cluster configuration information can be improved.

Manner 2: For any calculation operator included in the plurality of operators, a running latency of the calculation operator is obtained based on a first latency obtaining formula, device information of a first device, and description information of the calculation operator, where the first device is a device included in a cluster configured to run the first AI application.

In some embodiments, the device information of the first device includes one or more of the following: a dominant frequency of the first device, a bandwidth size of the first device, or the like.

In Manner 2, the running latency of the calculation operator is obtained based on the first latency obtaining formula, the device information of the first device, and the description information of the calculation operator.

The first latency obtaining formula is:

$$\begin{cases} t_{compute\text{-}n} = \dfrac{F_n}{\beta_n P_n} \\ t_{move\text{-}n} = \dfrac{M_n}{\alpha_n B_n} \end{cases}.$$

In the first latency obtaining formula, $t_{compute\text{-}n}$ is the calculation latency needed by the calculation operator to perform data calculation, $F_n$ is an amount of data that needs to be calculated by the calculation operator, $P_n$ is the dominant frequency of the first device, $\beta_n$ is instruction execution efficiency of the first AI application, $t_{move\text{-}n}$ is the read and write latency needed by the calculation operator to perform data reading and writing, $M_n$ is a data transfer amount of the calculation operator, where $M_n = \mu_m M$, $\mu_m$ is a transfer coefficient corresponding to the first device, $M$ is an amount of data that needs to be read and written theoretically by the calculation operator, $B_n$ is the bandwidth size of the first device, and $\alpha_n$ is bandwidth utilization of the first device. The running latency of the calculation operator includes the calculation latency and/or the read and write latency.

Different devices have different read and write performance, and different devices may correspond to different transfer coefficients $\mu_m$, where $\mu_m$ may be greater than 1, equal to 1, or less than 1.

The amount $F_n$ of data that needs to be calculated by the calculation operator is calculated based on the quantity of pieces of data that needs to be calculated by the calculation operator, the data type, and the data format.

For example, for the foregoing calculation operator used for implementing an addition operation, the data that needs to be calculated by the calculation operator includes data a and data b. The quantity of pieces of data that needs to be calculated by the calculation operator is 2, and the data a and the data b are both integers. It is assumed that data formats of the data a and the data b are one-dimensional data. In a case of one-dimensional data, an integer includes four bytes, so that the data a and the data b are both four-byte data. Therefore, it may be calculated that the amount of data that needs to be calculated by the calculation operator is eight bytes.

The amount M of data that needs to be read and written theoretically by the calculation operator is calculated based on the quantity of pieces of data that needs to be read and written by the calculation operator, the data type, and the data format.

The foregoing calculation operator used for implementing an addition operation is still used as an example. The data that needs to be read and written by the calculation operator includes data a and data b. The quantity of pieces of data that needs to be read and written by the calculation operator is 2, and the data a and the data b are both integers. It is assumed that data formats of the data a and the data b are one-dimensional data. In a case of one-dimensional data, an integer includes four bytes, so that the data a and the data b are both four-byte data. Therefore, it may be calculated that the amount of data that needs to be read and written theoretically by the calculation operator is eight bytes.

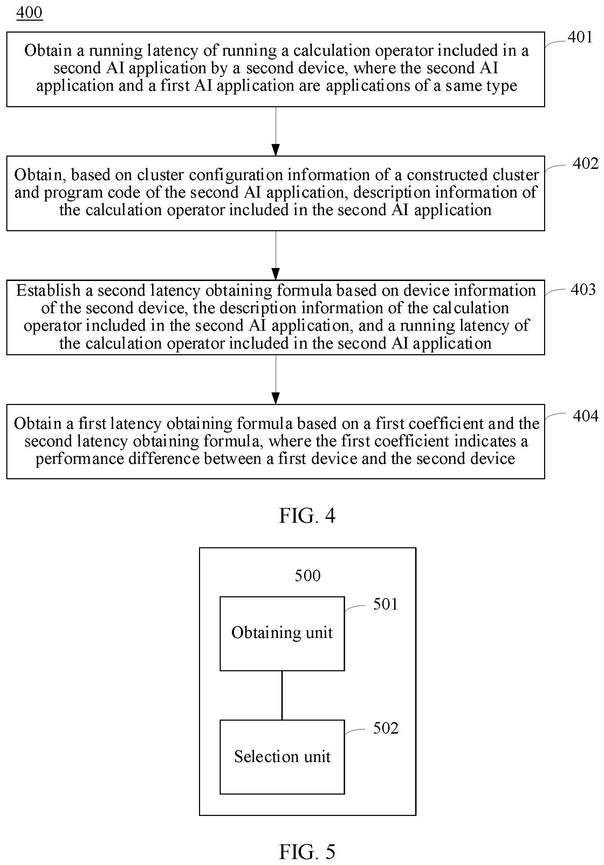

The instruction execution efficiency $\beta_n$ of the first AI application and the bandwidth utilization $\alpha_n$ of the first device are obtained through a second device in a constructed cluster configured to run a second AI application and the second AI application. A detailed obtaining process is described in detail in a subsequent method 400 shown in FIG. 4, and is not described in detail herein.

In some embodiments, the first AI application and the second AI application are applications of a same type. For example, the first AI application and the second AI application are different convolutional neural networks.

In Manner 2, information used for obtaining the running latency of the calculation operator includes the device information of the first device and the description information of the calculation operator. The device information of the first device and the description information of the calculation operator are software information of the first AI application. In this way, during obtaining of the running latency of the calculation operator, the software information of the first AI application is used, and hardware information of the first device is also used, so that the information used for obtaining the running latency of the calculation operator is enriched, thereby improving precision of obtaining the running latency of the calculation operator.

In some embodiments, the plurality of operators further include a communication operator, and a running latency of the communication operator may be further obtained in step 1031. Optionally, in step 1031, the software configuration information in the any one piece of first cluster configuration information includes a parallel running mode of the first AI application, and a networking mode of the cluster configured to run the first AI application is determined based on the parallel running mode. The running latency of the communication operator may be obtained based on a communication simulator, the networking mode, and description information of the communication operator. The communication simulator is configured to simulate a running process of the communication operator.

During implementation, the networking mode and content, such as an amount of data that needs to be communicated by the communication operator, a communication algorithm corresponding to the communication operator, and/or a communication domain corresponding to the communication operator, that is included in the description information of the communication operator are input into the communication simulator. In this way, the communication simulator simulates the running process of the communication operator based on the networking mode and the description information of the communication operator, to obtain the running latency of the communication operator. Then, the running latency of the communication operator that is output by the communication simulator is obtained.

For other communication operators included in the plurality of operators, a running latency of each of the other communication operators is obtained according to the foregoing process.

1032: Obtain a running latency of the first AI application based on the running latencies of the plurality of operators and the dependency between the plurality of operators.

In step 1032, the running latency of running the first AI application is obtained based on the running latencies of the plurality of operators and the dependency between the plurality of operators by using a discrete event simulator.

During implementation, a running latency of each operator and dependency information of each operator are input into the discrete event simulator, so that the discrete event simulator simulates, based on the running latency of each operator and the dependency information of each operator, a process of running the first AI application, to obtain the running latency of running the first AI application, and the running latency of the first AI application that is output by the discrete event simulator is obtained.

In this embodiment of this application, a plurality of pieces of first cluster configuration information are obtained, and application feature information respectively corresponding to the plurality of pieces of first cluster configuration information is obtained based on the first AI application and the plurality of pieces of first cluster configuration information. Because the application feature information includes a plurality of operators and a dependency between the plurality of operators, running latencies of running the first AI application by a plurality of clusters can be accurately obtained based on the application feature information. To be specific, a running latency corresponding to each piece of first cluster configuration information may be accurately obtained, corresponding first cluster configuration information whose running latency satisfies the first condition is selected from the plurality of pieces of first cluster configuration information, a cluster is constructed based on the selected first cluster configuration information, and the first AI application is run by using the constructed cluster, so that cluster resource utilization and performance of running the first AI application can be improved.

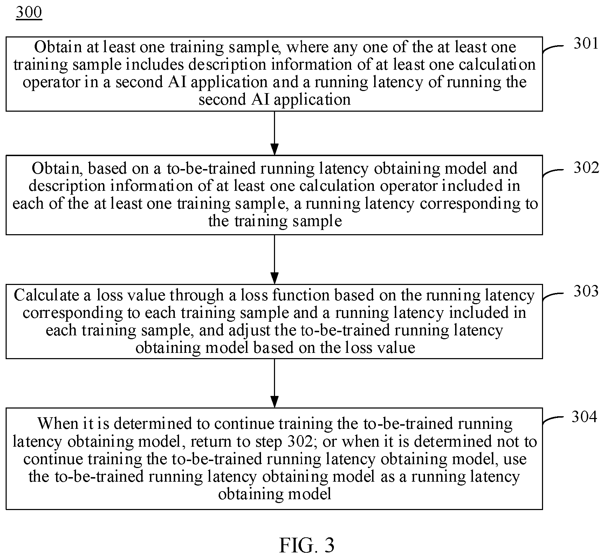

Refer to FIG. 3. An embodiment of this application provides a method 300 for training a latency obtaining model. The method 300 is used to train the running latency obtaining model used in the method 100 shown in FIG. 1. The method 300 includes the following process of step 301 to step 304.

Step 301: Obtain at least one training sample, where any one of the at least one training sample includes description information of at least one calculation operator in a second AI application and a running latency of running the second AI application.

For any training sample, the following operations of 3011 and 3012 may be used to obtain the training sample.

3011: Obtain description information of at least one calculation operator in the second AI application based on cluster configuration information of a cluster and program code of the second AI application.

The cluster configuration information of the cluster is determined based on device information of a first device. The first device is a device in the cluster, and the first device is an obtained device. For example, the first device is a purchased device.

For a process of obtaining the description information of the at least one calculation operator in the second AI application in step 3011, refer to related content in step 102 of the method 100 shown in FIG. 1. Details are not described herein again.

In some embodiments, a first AI application and the second AI application are applications of a same type. For example, both the first AI application and the second AI application are convolutional neural networks.

3012: Measure a running latency of running the second AI application by the first device, to obtain a training sample that includes description information of at least one calculation operator in the second AI application and a running latency of the second AI application.

When the first device is obtained, the training sample may be obtained through the first device, and the running latency obtaining model may be trained. In this case, in the method 100 shown in FIG. 1, a running latency of a calculation operator in the first AI application may be obtained in Manner 1.

Different training samples may be obtained by performing the foregoing operations of 3011 and 3012 on different second AI applications.

After the at least one training sample is obtained, model training is performed based on the at least one training sample, to obtain the running latency obtaining model. A training process includes the following process of step 302 to step 304.

Step 302: Obtain, based on a to-be-trained running latency obtaining model and description information of at least one calculation operator included in each of the at least one training sample, a running latency corresponding to the training sample.

For any training sample, a running latency corresponding to the training sample is a running latency of the second AI application that is output after the to-be-trained running latency obtaining model performs inference on description information of at least one calculation operator in the second AI application in the training sample, and the running latency is used as the running latency corresponding to the training sample.

The to-be-trained running latency obtaining model includes a random forest algorithm, a logistic regression algorithm, a support vector machine (support vector machine, SVM), or the like.

In step 302, the description information of the at least one calculation operator included in each training sample is input into the to-be-trained running latency obtaining model, so that the to-be-trained running latency obtaining model obtains through inference, based on the description information of the at least one calculation operator included in each training sample, a running latency corresponding to each training sample, and the running latency corresponding to each training sample that is output by the to-be-trained running latency obtaining model is obtained.

Step 303: Calculate a loss value through a loss function based on the running latency corresponding to each training sample and a running latency included in each training sample, and adjust the to-be-trained running latency obtaining model based on the loss value.

In step 303, a hyperparameter, a model structure, and/or the like of the to-be-trained running latency obtaining model are/is adjusted based on the loss value.

Step 304: When it is determined to continue training the to-be-trained running latency obtaining model, perform step 302 again; or when it is determined not to continue training the to-be-trained running latency obtaining model, use the to-be-trained running latency obtaining model as the running latency obtaining model.

In some embodiments, when a quantity of times of training the to-be-trained running latency obtaining model reaches a specified quantity of times, it is determined not to continue training the to-be-trained running latency obtaining model.

In some embodiments, a plurality of check samples are used to obtain a correctness rate of obtaining the running latency through inference by the to-be-trained running latency obtaining model. When the correctness rate exceeds a specified correctness rate threshold, it is determined not to continue training the to-be-trained running latency obtaining model.

During implementation, the plurality of check samples are obtained. For any one of the plurality of check samples, the any one check sample includes description information of at least one calculation operator in the second AI application and the running latency of the second AI application. A running latency corresponding to the any one check sample is obtained based on description information of at least one calculation operator in the any one check sample and the to-be-trained running latency obtaining model. A running latency corresponding to each check sample is obtained according to the foregoing process.

The correctness rate is calculated based on the running latency corresponding to each check sample and a running latency included in each check sample. When the correctness rate does not exceed the specified correctness rate threshold, it is determined to continue training the to-be-trained running latency obtaining model. When the correctness rate exceeds the specified correctness rate threshold, it is determined not to continue training the to-be-trained running latency obtaining model.

In some embodiments, a process of obtaining the plurality of check samples is the same as a process of obtaining the training sample. Details are not described herein again.

In this embodiment of this application, the at least one training sample is obtained, and any training sample includes description information of at least one calculation operator in the second AI application and the running latency of running the second AI application, so that the running latency obtaining model can be obtained through training based on the at least one training sample. The running latency obtaining model is used to obtain a running latency of a calculation operator, and a speed and precision of obtaining the running latency by using the running latency obtaining model are high. Running latencies of a plurality of calculation operators in the first AI application may be obtained by using the running latency obtaining model. Based on the running latencies of the plurality of calculation operators, a speed and precision of obtaining the running latency of the first AI application can be improved.

Refer to FIG. 4. An embodiment of this application provides a method 400 for establishing a latency obtaining formula. The method 400 is used to establish the first latency obtaining formula used in the method 100 shown in FIG. 1. The method 400 includes the following process of step 401 to step 404.

Step 401: Obtain a running latency of running a calculation operator included in a second AI application by a second device, where the second AI application and a first AI application are applications of a same type.

The running latency includes an actual calculation latency and/or an actual read and write latency of the calculation operator.

The second AI application is an application run by a constructed cluster, and the second device is a device in the cluster.

In step 401, an amount of data actually calculated and/or an amount of data actually read and written by the calculation operator included in the second AI application are/is further obtained.

For any calculation operator in the second AI application, the second device may be used to run the calculation operator, and time consumed by the second device to run the calculation operator is measured, to obtain the running latency of the calculation operator. Optionally, during running of the calculation operator by the second device, an amount of data actually calculated and/or an amount of data actually read and written by the calculation operator are/is further measured.

In this embodiment of this application, a first device in a cluster configured to run the first AI application cannot be obtained, but device information of the first device can be obtained. In this way, the first latency obtaining formula is obtained based on the device information of the first device, the second AI application, and device information of the second device in the constructed cluster. In this case, in the method 100 shown in FIG. 1, running latencies of calculation operators in the first AI application may be obtained in Manner 2.

Step 402: Obtain, based on cluster configuration information of the constructed cluster and program code of the second AI application, description information of the calculation operator included in the second AI application.

For a process of obtaining the description information of the calculation operator in the second AI application in step 402, refer to related content in step 102 of the method 100 shown in FIG. 1. Details are not described herein again.

Step 403: Establish a second latency obtaining formula based on the device information of the second device, the description information of the calculation operator included in the second AI application, and the running latency of the calculation operator included in the second AI application.

The established second latency obtaining for-

mula is:
$$\begin{cases} t_{move} = \dfrac{M_c}{\alpha_c B_c} \\ t_{compute} = \dfrac{F_c}{\beta_c P_c} \end{cases}.$$

In the second formula, $t_{compute}$ is an actual calculation latency of the calculation operator in the second AI application, $F_c$ is an amount of data actually calculated by the calculation operator, $P_c$ is a dominant frequency of the second device, $\beta_c$ is instruction execution efficiency of the second AI application, $t_{move}$ is an actual read and write latency of the calculation operator, $M_c$ is a data transfer amount (which is an amount of data actually read and written by the calculation operator) of the calculation operator, $B_c$ is a bandwidth size of the second device, and $\alpha_c$ is bandwidth utilization of the second device.

Step 404: Obtain the first latency obtaining formula based on a first coefficient and the second latency obtaining formula, where the first coefficient indicates a performance difference between the first device and the second device.

In step 404, the instruction execution efficiency $\beta_c$ of the second AI application and the bandwidth utilization $\alpha_c$ of the second device may be calculated based on the second latency obtaining formula, where

$\alpha_c = \dfrac{\dfrac{M_c}{t_{move}}}{B_c}$ , and $\beta_c = \dfrac{\dfrac{F_c}{t_{compute}}}{P_c}$ . The first latency obtaining formula is established based on the first coefficient, the instruction execution efficiency $\beta_c$ of the second AI application, and the bandwidth utilization $\alpha_c$ of the second device.

The established first latency obtaining formula is:

$$\begin{cases} t_{compute\text{-}n} = \dfrac{F_n}{\beta_n P_n} \\ t_{move\text{-}n} = \dfrac{M_n}{\alpha_n B_n} \end{cases} = \begin{cases} t_{compute\text{-}n} = \dfrac{F_n}{\mu_\beta \beta_c P_n} \\ t_{move\text{-}n} = \dfrac{M_n}{\mu_\alpha \alpha_c B_n} \end{cases}.$$

In the first latency obtaining formula, the first coefficient includes $\mu_\beta$ and $\mu_\alpha$, which are obtained based on the device information of the first device and the device information of the second device.

In this embodiment of this application, the second device runs the calculation operator included in the second AI application, to obtain the running latency of the calculation operator included in the second AI application, and the description information of the calculation operator in the second application is obtained. The second latency obtaining formula is established based on the device information of the second device, the description information of the calculation operator in the second application, and the running latency of the calculation operator included in the second AI application. The first latency obtaining formula is obtained based on the first coefficient and the second latency obtaining formula, where the first coefficient indicates the performance difference between the first device and the second device. In this way, the running latencies of the calculation operators in the first AI application can be accurately obtained based on the constructed first latency obtaining formula, and a speed of obtaining the running latencies based on the first latency obtaining formula is high. In this way, the running latencies of the plurality of calculation operators in the first AI application are obtained based on the first running latency obtaining formula. Based on the running latencies of the plurality of calculation operators, efficiency and precision of obtaining a running latency of the first AI application can be improved.

Refer to FIG. 5. An embodiment of this application provides an apparatus 500 for obtaining cluster configuration information. The apparatus 500 is deployed on a terminal device, a server, or a cloud platform. The terminal device, the server, or the cloud platform may be configured to perform the method 100 shown in FIG. 1. The apparatus 500 includes:

an obtaining unit 501, configured to obtain M pieces of first cluster configuration information, where M is an integer greater than 1, each piece of first cluster configuration information is used for describing a configuration solution for constructing a cluster, and the cluster is configured to run an artificial intelligence AI application;

the obtaining unit 501 is further configured to obtain, based on the AI application and the M pieces of first cluster configuration information, M pieces of first application feature information respectively corresponding to the M pieces of first cluster configuration information, where each piece of first application feature information includes description information of a plurality of operators in the AI application and a dependency between the plurality of operators; and

the obtaining unit 501 is further configured to obtain, based on the M pieces of first application feature information, running latencies of running the AI application by M clusters, where the M clusters are in one-to-one correspondence with the M pieces of first cluster configuration information; and

a selection unit 502, configured to select, from the M pieces of first cluster configuration information, corresponding first cluster configuration information whose running latency satisfies a first condition.

Optionally, for a detailed implementation process of the obtaining unit 501 obtaining the M pieces of first cluster configuration information, refer to related content in step 101 of the method 100 shown in FIG. 1. Details are not described herein again.

Optionally, for a detailed implementation process of the obtaining unit 501 obtaining the M pieces of first application feature information, refer to related content in step 102 of the method 100 shown in FIG. 1. Details are not described herein again.

Optionally, for a detailed implementation process of the obtaining unit 501 obtaining a running latency of the AI application, refer to related content in step 103 of the method 100 shown in FIG. 1. Details are not described herein again.

Optionally, for a detailed implementation process of the selection unit 502 selecting the corresponding first cluster configuration information whose running latency satisfies the first condition, refer to related content in step 104 of the method 100 shown in FIG. 1. Details are not described herein again.

Optionally, each piece of first cluster configuration information includes software configuration information and hardware configuration information.

Optionally, the obtaining unit 501 is configured to:

select software configuration information of the M pieces of first cluster configuration information from a software configuration information range, and/or select hardware configuration information of the M pieces of first cluster configuration information from a hardware configuration information range.

Optionally, for a detailed implementation process of the obtaining unit 501 selecting the software configuration information and/or the hardware configuration information of the M pieces of first cluster configuration information, refer to related content in step 101 of the method 100 shown in FIG. 1. Details are not described herein again.

Optionally, a quantity of pieces of corresponding selected first cluster configuration information whose running latency satisfies the first condition is N, where N is an integer greater than or equal to 1 and less than M.

The obtaining unit 501 is further configured to mutate software configuration information and/or hardware configuration information included in the N pieces of first cluster configuration information, to obtain Z pieces of second cluster configuration information, where Z is an integer greater than N.

The obtaining unit 501 is further configured to obtain, based on the AI application and the Z pieces of second cluster configuration information, second application feature information respectively corresponding to the Z pieces of second cluster configuration information.

The obtaining unit 501 is further configured to obtain, based on Z pieces of second application feature information, running latencies of running the AI application by Z clusters, where the Z clusters are in one-to-one correspondence with the Z pieces of second cluster configuration information.

The selection unit 502 is further configured to select, from the Z pieces of second cluster configuration information, corresponding second cluster configuration information whose running latency satisfies the first condition.

Optionally, for a detailed implementation process of the obtaining unit 501 mutating the software configuration information and/or the hardware configuration information included in the N pieces of first cluster configuration information, refer to related content in step 105 of the method 100 shown in FIG. 1. Details are not described herein again.

Optionally, for a detailed implementation process of the obtaining unit 501 obtaining the Z pieces of second application feature information, refer to related content in step 102 of the method 100 shown in FIG. 1. Details are not described herein again.

Optionally, for a detailed implementation process of the obtaining unit 501 obtaining the running latencies of running the AI application by the Z clusters, refer to related content in step 103 of the method 100 shown in FIG. 1. Details are not described herein again.

Optionally, for a detailed implementation process of the selection unit 502 selecting the corresponding second cluster configuration information whose running latency satisfies the first condition, refer to related content in step 104 of the method 100 shown in FIG. 1. Details are not described herein again.

Optionally, the software configuration information includes one or more of the following: a parallel running mode used by the AI application, a ratio of a quantity of devices used by the AI application to a quantity of devices included in the cluster, or a scheduling mode used by the cluster to run the AI application.

Optionally, the hardware configuration information includes one or more of the following: a quantity of devices included in the cluster, a quantity of processors included in the device in the cluster, a ratio between different types of processors included in the device in the cluster, a memory parameter included in the device in the cluster, a bandwidth of the device in the cluster, or a hard disk parameter included in the device in the cluster.

Optionally, the obtaining unit 501 is configured to:

obtain, based on program code of the AI application and each piece of first cluster configuration information, an intermediate representation IR graph corresponding to each piece of first cluster configuration information; and

parse the IR graph corresponding to each piece of first cluster configuration information, to obtain first application feature information corresponding to each piece of first cluster configuration information.

Optionally, for a detailed implementation process of the obtaining unit 501 obtaining the intermediate representation IR graph corresponding to each piece of first cluster configuration information, refer to related content in step 1021 of the method 100 shown in FIG. 1. Details are not described herein again.

Optionally, for a detailed implementation process of the obtaining unit 501 parsing the IR graph corresponding to each piece of first cluster configuration information, refer to related content in step 1022 of the method 100 shown in FIG. 1. Details are not described herein again.

Optionally, the obtaining unit 501 is configured to:

for each piece of first application feature information, obtain running latencies of a plurality of operators based on description information of the plurality of operators included in the first application feature information; and

obtain the running latency of the AI application based on the running latencies of the plurality of operators and the dependency between the plurality of operators.

Optionally, for a detailed implementation process of the obtaining unit 501 obtaining the running latencies of the plurality of operators, refer to related content in step 1031 of the method 100 shown in FIG. 1. Details are not described herein again.

Optionally, for a detailed implementation process of the obtaining unit 501 obtaining the running latency of the AI application based on the running latencies of the plurality of operators and the dependency between the plurality of operators, refer to related content in step 1032 of the method 100 shown in FIG. 1. Details are not described herein again.

Optionally, the plurality of operators include a calculation operator, and the obtaining unit 501 is configured to obtain a running latency of the calculation operator based on a running latency obtaining model and description information of the calculation operator.

Optionally, for a detailed implementation process of the obtaining unit 501 obtaining the running latency of the calculation operator based on the running latency obtaining model and the description information of the calculation operator, refer to related content in step 1031 of the method 100 shown in FIG. 1. Details are not described herein again.

Optionally, the obtaining unit 501 is further configured to:

perform model training based on at least one training sample to obtain the running latency obtaining model, where any one of the at least one training sample includes description information of at least one calculation operator in another AI application and a running latency of running the another AI application.

Optionally, for a detailed implementation process of the obtaining unit 501 performing model training based on the at least one training sample, refer to related content in steps 302 to 304 of the method 300 shown in FIG. 3. Details are not described herein again.

Optionally, the plurality of operators include a calculation operator, and the obtaining unit 501 is configured to obtain a running latency of the calculation operator based on device information of a first device and description information of the calculation operator according to a first latency obtaining formula, where the first device is a device included in the cluster.

Optionally, for a detailed implementation process of the obtaining unit 501 obtaining the running latencies of the calculation operators based on the first latency obtaining formula, refer to related content in step 1031 of the method 100 shown in FIG. 1. Details are not described herein again.

Optionally, the obtaining unit 501 is further configured to:

obtain a running latency of running a calculation operator included in another AI application by a second device, where the second device is a device in a constructed cluster configured to run the another AI application;

obtain description information of the calculation operator in the another AI application based on program code of the another AI application and cluster configuration information of the cluster running the another AI application;

establish a second latency obtaining formula based on device information of the second device, the description information of the calculation operator of the another AI application, and the running latency of the calculation operator included in the another AI application; and

obtain the first latency obtaining formula based on a first coefficient and the second latency obtaining formula, where the first coefficient indicates a performance difference between the first device and the second device.

Optionally, for a detailed implementation process of the obtaining unit 501 obtaining the running latency of running the calculation operator included in the another AI application by the second device, refer to related content in step 401 of the method 400 shown in FIG. 4. Details are not described herein again.

Optionally, for a detailed implementation process of the obtaining unit 501 obtaining the description information of the calculation operator in the another AI application, refer to related content in step 402 of the method 400 shown in FIG. 4. Details are not described herein again.

Optionally, for a detailed implementation process of the obtaining unit 501 establishing the second latency obtaining formula, refer to related content in step 403 of the method 400 shown in FIG. 4. Details are not described herein again.

Optionally, for a detailed implementation process of the obtaining unit 501 obtaining the first latency obtaining formula based on the first coefficient and the second latency obtaining formula, refer to related content in step 404 of the method 400 shown in FIG. 4. Details are not described herein again.

Optionally, the running latency of the calculation operator includes a calculation latency needed by the calculation operator to perform data calculation, and/or a read and write latency needed by the calculation operator to perform data reading and writing.

Optionally, the plurality of operators further include a communication operator, and the obtaining unit 501 is further configured to:

obtain a running latency of the communication operator based on a communication simulator, the first cluster configuration information corresponding to the first application feature information, and description information of the communication operator, where the communication simulator is configured to simulate a running process of the communication operator.

Optionally, for a detailed implementation process of the obtaining unit 501 obtaining the running latency of the communication operator, refer to related content in step 1031 of the method 100 shown in FIG. 1. Details are not described herein again.

In this embodiment of this application, during obtaining of the running latency of the AI application by the obtaining unit, because the AI application is used, to be specific, the obtaining unit obtains, based on the AI application and the M pieces of first cluster configuration information, the M pieces of first application feature information respectively corresponding to the M pieces of first cluster configuration information, and obtains, based on the M pieces of first application feature information, the running latencies of running the AI application by the M clusters, the obtaining unit can accurately obtain a running latency of running the AI application by each cluster. The selection unit selects, from the M pieces of first cluster configuration information, the corresponding first cluster configuration information whose running latency satisfies the first condition. In this way, a cluster is constructed based on the selected cluster configuration information, and the constructed cluster is used to run the AI application, so that cluster resource utilization and performance of running the AI application can be improved.

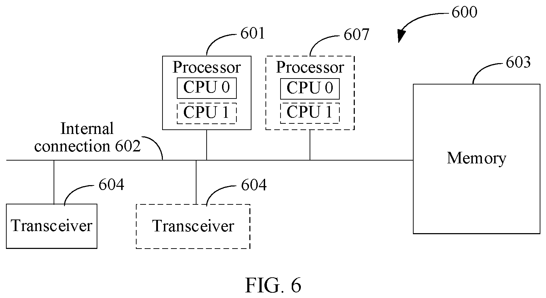

Refer to FIG. 6. An embodiment of this application provides a diagram of a device 600. The device 600 may be a terminal device, a server, or a cloud platform. The terminal device, the server, or the cloud platform may be configured to perform the method 100 shown in FIG. 1. The device 600 includes at least one processor 601, an internal connection 602, a memory 603, and at least one transceiver 604.

The device 600 is an apparatus of a hardware structure.

In some embodiments, the device 600 may be configured to implement function modules in the apparatus 500 in FIG. 5. For example, a person skilled in the art may perceive that the obtaining unit 501 and the selection unit 502 in the apparatus 500 shown in FIG. 5 may be implemented by invoking code in the memory 603 by using the at least one processor 601.

Optionally, the processor 601 may be a general-purpose central processing unit (central processing unit, CPU), a network processing unit (network processing unit, NP), a microprocessor, an application-specific integrated circuit (application-specific integrated circuit, ASIC), or one or more integrated circuits configured to control program execution of solutions of this application.

The internal connection 602 may include a path for transmitting information between the foregoing components. Optionally, the internal connection 602 is a board, a bus, or the like.

The transceiver 604 is configured to communicate with another node or a communication network.

The memory 603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 603 is configured to store application program code for executing the solutions in this application, and the processor 601 controls execution. The processor 601 is configured to execute the application program code stored in the memory 603, and cooperate with the at least one transceiver 604, so that the device 600 implements functions in the method in this patent.

During specific implementation, in an embodiment, the processor 601 may include one or more CPUs, for example, a CPU 0 and a CPU 1 in FIG. 6.

During specific implementation, in an embodiment, the device 600 may include a plurality of processors, for example, the processor 601 and a processor 607 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

**Claims**

1. A method for obtaining cluster configuration information, wherein the method comprises:

   obtaining M pieces of first cluster configuration information, wherein M is an integer greater than 1, each piece of first cluster configuration information is used for describing a configuration solution for constructing a cluster, and the cluster is configured to run an artificial intelligence AI application;
   obtaining, based on the AI application and the M pieces of first cluster configuration information, M pieces of first application feature information respectively corresponding to the M pieces of first cluster configuration information, wherein each piece of first application feature information comprises description information of a plurality of operators in the AI application and a dependency between the plurality of operators;

   obtaining, based on the M pieces of first application feature information, running latencies of running the AI application by M clusters, wherein the M clusters are in one-to-one correspondence with the M pieces of first cluster configuration information; and
   selecting, from the M pieces of first cluster configuration information, corresponding first cluster configuration information whose running latency satisfies a first condition.

2. The method according to claim 1, wherein each piece of first cluster configuration information comprises software configuration information and hardware configuration information.

3. The method according to claim 2, wherein the obtaining M pieces of cluster configuration information comprises:
   selecting software configuration information of the M pieces of first cluster configuration information from a software configuration information range, and/or selecting hardware configuration information of the M pieces of first cluster configuration information from a hardware configuration information range.

4. The method according to claim 3, wherein a quantity of pieces of selected corresponding first cluster configuration information whose running latency satisfies the first condition is N, N is an integer greater than or equal to 1 and less than M, and the method further comprises:

   mutating software configuration information and/or hardware configuration information comprised in the N pieces of first cluster configuration information, to obtain Z pieces of second cluster configuration information, wherein Z is an integer greater than N;
   obtaining, based on the AI application and the Z pieces of second cluster configuration information, second application feature information respectively corresponding to the Z pieces of second cluster configuration information;
   obtaining, based on Z pieces of second application feature information, running latencies of running the AI application by Z clusters, wherein the Z clusters are in one-to-one correspondence with the Z pieces of second cluster configuration information; and
   selecting, from the Z pieces of second cluster configuration information, corresponding second cluster configuration information whose running latency satisfies the first condition.

5. The method according to any one of claims 2 to 4, wherein the software configuration information comprises one or more of the following: a parallel running mode used by the AI application, a ratio of a quantity of devices used by the AI application to a quantity of devices comprised in the cluster, or a scheduling mode used by the cluster to run the AI application.

6. The method according to any one of claims 2 to 5, wherein the hardware configuration information comprises one or more of the following: a quantity of devices comprised in the cluster, a quantity of processors comprised in the device in the cluster, a ratio between different types of processors comprised in the device in the cluster, a memory parameter comprised in the device in the cluster, a bandwidth of the device in the cluster, or a hard disk parameter comprised in the device in the cluster.

7. The method according to any one of claims 1 to 6, wherein the obtaining, based on the AI application and the M pieces of first cluster configuration information, M pieces of first application feature information respectively corresponding to the M pieces of first cluster configuration information comprises:

   obtaining, based on program code of the AI application and each piece of first cluster configuration information, an intermediate representation IR graph corresponding to each piece of first cluster configuration information; and
   parsing the IR graph corresponding to each piece of first cluster configuration information, to obtain first application feature information corresponding to each piece of first cluster configuration information.

8. The method according to any one of claims 1 to 7, wherein the obtaining, based on the M pieces of first application feature information, running latencies of running the AI application by M clusters comprises:

   for each piece of first application feature information, obtaining running latencies of a plurality of operators based on description information of the plurality of operators comprised in the first application feature information; and
   obtaining a running latency of the AI application based on the running latencies of the plurality of operators and a dependency between the plurality of operators.

9. The method according to claim 8, wherein the plurality of operators comprise a calculation operator, and the obtaining running latencies of a plurality of operators based on description information of the plurality of operators comprised in the first application feature information comprises:
   obtaining a running latency of the calculation operator based on a running latency obtaining model and description information of the calculation operator.

10. The method according to claim 9, wherein the method comprises:
    performing model training based on at least one training sample to obtain the running latency obtaining model, wherein any one of the at least one training sample comprises description information of at least one calculation operator in another AI application and a running latency of running the another AI application.

11. The method according to claim 8, wherein the plurality of operators comprise a calculation operator, and the obtaining running latencies of a plurality of operators based on description information of the plurality of operators comprised in the first application feature information comprises:
    obtaining a running latency of the calculation operator based on device information of a first device and description information of the calculation operator according to a first latency obtaining formula, wherein the first device is a device comprised in the cluster.

12. The method according to claim 11, wherein the method comprises:

    obtaining a running latency of running a calculation operator comprised in another AI application by a second device, wherein the second device is a device in a constructed cluster configured to run the another AI application;
    obtaining description information of the calculation operator in the another AI application based on program code of the another AI application and cluster configuration information of the cluster running the another AI application;
    establishing a second latency obtaining formula based on device information of the second device, the description information of the calculation operator in the another AI application, and a running latency of the calculation operator comprised in the another AI application; and
    obtaining the first latency obtaining formula based on a first coefficient and the second latency obtaining formula, wherein the first coefficient indicates a performance difference between the first device and the second device.

13. The method according to any one of claims 9 to 12, wherein the running latency of the calculation operator comprises a calculation latency needed by the calculation operator to perform data calculation, and/or a read and write latency needed by the calculation operator to perform data reading and writing.

14. The method according to any one of claims 9 to 13, wherein the plurality of operators further comprise a communication operator; and
    the obtaining running latencies of a plurality of operators based on description information of the plurality of operators comprised in the first application feature information further comprises:
obtaining a running latency of the communication operator based on a communication simulator, the first cluster configuration information corresponding to the first application feature information, and description information of the communication operator, wherein the communication simulator is configured to simulate a running process of the communication operator.

15. An apparatus for obtaining cluster configuration information, wherein the apparatus comprises:

an obtaining unit, configured to obtain M pieces of first cluster configuration information, wherein M is an integer greater than 1, each piece of first cluster configuration information is used for describing a configuration solution for constructing a cluster, and the cluster is configured to run an artificial intelligence AI application, wherein
the obtaining unit is further configured to obtain, based on the AI application and the M pieces of first cluster configuration information, M pieces of first application feature information respectively corresponding to the M pieces of first cluster configuration information, wherein each piece of first application feature information comprises description information of a plurality of operators in the AI application and a dependency between the plurality of operators; and
the obtaining unit is further configured to obtain, based on the M pieces of first application feature information, running latencies of running the AI application by M clusters, wherein the M clusters are in one-to-one correspondence with the M pieces of first cluster configuration information; and
a selection unit, configured to select, from the M pieces of first cluster configuration information, corresponding first cluster configuration information whose running latency satisfies a first condition.

16. The apparatus according to claim 15, wherein each piece of first cluster configuration information comprises software configuration information and hardware configuration information.

17. The apparatus according to claim 16, wherein the obtaining unit is configured to:
select software configuration information of the M pieces of first cluster configuration information from a software configuration information range, and/or select hardware configuration information of the M pieces of first cluster configuration information from a hardware configuration information range.

18. The apparatus according to claim 17, wherein a quantity of pieces of selected corresponding first cluster configuration information whose running latency satisfies the first condition is N, and N is an integer greater than or equal to 1 and less than M;

the obtaining unit is further configured to mutate software configuration information and/or hardware configuration information comprised in the N pieces of first cluster configuration information, to obtain Z pieces of second cluster configuration information, wherein Z is an integer greater than N;
the obtaining unit is further configured to obtain, based on the AI application and the Z pieces of second cluster configuration information, second application feature information respectively corresponding to the Z pieces of second cluster configuration information;
the obtaining unit is further configured to obtain, based on Z pieces of second application feature information, running latencies of running the AI application by Z clusters, wherein the Z clusters are in one-to-one correspondence with the Z pieces of second cluster configuration information; and
the selection unit is further configured to select, from the Z pieces of second cluster configuration information, corresponding second cluster configuration information whose running latency satisfies the first condition.

19. The apparatus according to any one of claims 16 to 18, wherein the software configuration information comprises one or more of the following: a parallel running mode used by the AI application, a ratio of a quantity of devices used by the AI application to a quantity of devices comprised in the cluster, or a scheduling mode used by the cluster to run the AI application.

20. The apparatus according to any one of claims 16 to 19, wherein the hardware configuration information comprises one or more of the following: a quantity of devices comprised in the cluster, a quantity of processors comprised in the device in the cluster, a ratio between different types of processors comprised in the device in the cluster, a memory parameter comprised in the device in the cluster, a bandwidth of the device in the cluster, or a hard disk parameter comprised in the device in the cluster.

21. The apparatus according to any one of claims 15 to 20, wherein the obtaining unit is configured to:

obtain, based on program code of the AI application and each piece of first cluster configuration information, an intermediate representation IR graph corresponding to each piece of first cluster configuration information; and parse the IR graph corresponding to each piece of first cluster configuration information, to obtain first application feature information corresponding to each piece of first cluster configuration information.

22. The apparatus according to any one of claims 15 to 21, wherein the obtaining unit is configured to:

for each piece of first application feature information, obtain running latencies of a plurality of operators based on description information of the plurality of operators comprised in the first application feature information; and obtain a running latency of the AI application based on the running latencies of the plurality of operators and a dependency between the plurality of operators.

23. The apparatus according to claim 22, wherein the plurality of operators comprise a calculation operator, and the obtaining unit is configured to obtain a running latency of the calculation operator based on a running latency obtaining model and description information of the calculation operator.

24. The apparatus according to claim 23, wherein the obtaining unit is further configured to: perform model training based on at least one training sample to obtain the running latency obtaining model, wherein any one of the at least one training sample comprises description information of at least one calculation operator in another AI application and a running latency of running the another AI application.

25. The apparatus according to claim 22, wherein the plurality of operators comprise a calculation operator, and the obtaining unit is configured to obtain a running latency of the calculation operator based on device information of a first device and description information of the calculation operator according to a first latency obtaining formula, wherein the first device is a device comprised in the cluster.

26. The apparatus according to claim 25, wherein the obtaining unit is further configured to:

obtain a running latency of running a calculation operator comprised in another AI application by a second device, wherein the second device is a device in a constructed cluster configured to run the another AI application; obtain description information of the calculation operator in the another AI application based on program code of the another AI application and cluster configuration information of the cluster running the another AI application; establish a second latency obtaining formula based on device information of the second device, the description information of the calculation operator in the another AI application, and a running latency of the calculation operator comprised in the another AI application; and obtain the first latency obtaining formula based on a first coefficient and the second latency obtaining formula, wherein the first coefficient indicates a performance difference between the first device and the second device.

27. The apparatus according to any one of claims 23 to 26, wherein the running latency of the calculation operator comprises a calculation latency needed by the calculation operator to perform data calculation, and/or a read and write latency needed by the calculation operator to perform data reading and writing.

28. The apparatus according to any one of claims 23 to 27, wherein the plurality of operators further comprise a communication operator, and the obtaining unit is further configured to: obtain a running latency of the communication operator based on a communication simulator, the first cluster configuration information corresponding to the first application feature information, and description information of the communication operator, wherein the communication simulator is configured to simulate a running process of the communication operator.

29. A device for obtaining cluster configuration information, comprising at least one processor, wherein the at least one processor is configured to be coupled to a memory, and read and execute instructions in the memory, to enable the device to implement the method according to any one of claims 1 to 14.

30. A computer-readable storage medium, storing a computer program, wherein when the computer program is executed by a computer, the computer is enabled to implement the method according to any one of claims 1 to 14.

31. A computer program product, wherein the computer program product comprises a computer program stored in a computer-readable storage medium, and the computer program is loaded by a computer, to enable the computer to implement the method according to any one of claims 1 to 14.

100

| Mutate software configuration information and/or hardware configuration information included in the selected first cluster configuration information, to obtain a plurality of pieces of first cluster configuration information | 105 |
|---|---|

Obtain a plurality of pieces of first cluster configuration information — 101

Obtain, based on an AI application and the plurality of pieces of first cluster configuration information, a plurality of pieces of application feature information respectively corresponding to the plurality of pieces of first cluster configuration information — 102

Obtain, based on the plurality of pieces of application feature information, running latencies of running the first AI application by a plurality of clusters, where the plurality of clusters are in one-to-one correspondence with the plurality of pieces of first cluster configuration information — 103

Selected first cluster configuration information

Select, from the plurality of pieces of first cluster configuration information, corresponding first cluster configuration information whose running latency satisfies a first condition — 104

Target cluster configuration information

FIG. 1

FIG. 2

300

| Obtain at least one training sample, where any one of the at least one training sample includes description information of at least one calculation operator in a second AI application and a running latency of running the second AI application | ⌐ 301 |

| Obtain, based on a to-be-trained running latency obtaining model and description information of at least one calculation operator included in each of the at least one training sample, a running latency corresponding to the training sample | ⌐ 302 |

| Calculate a loss value through a loss function based on the running latency corresponding to each training sample and a running latency included in each training sample, and adjust the to-be-trained running latency obtaining model based on the loss value | ⌐ 303 |

| When it is determined to continue training the to-be-trained running latency obtaining model, return to step 302; or when it is determined not to continue training the to-be-trained running latency obtaining model, use the to-be-trained running latency obtaining model as a running latency obtaining model | ⌐ 304 |

FIG. 3

400

| Obtain a running latency of running a calculation operator included in a second AI application by a second device, where the second AI application and a first AI application are applications of a same type | 401 |

↓

| Obtain, based on cluster configuration information of a constructed cluster and program code of the second AI application, description information of the calculation operator included in the second AI application | 402 |

↓

| Establish a second latency obtaining formula based on device information of the second device, the description information of the calculation operator included in the second AI application, and a running latency of the calculation operator included in the second AI application | 403 |

↓

| Obtain a first latency obtaining formula based on a first coefficient and the second latency obtaining formula, where the first coefficient indicates a performance difference between a first device and the second device | 404 |

FIG. 4

500

| Obtaining unit | 501 |

|

| Selection unit | 502 |

FIG. 5

601    607                        600

Processor      Processor                   603

CPU 0          CPU 0          Memory

CPU 1          CPU 1

Internal
connection 602

604            604

Transceiver    Transceiver

FIG. 6

## INTERNATIONAL SEARCH REPORT

| International application No. |
| --- |
| **PCT/CN2023/135964** |

### A.    CLASSIFICATION OF SUBJECT MATTER

G06F9/445(2018.01)i;  G06F9/50(2006.01)i;  G06N3/02(2006.01)n;  G06N20/00(2019.01)n

According to International Patent Classification (IPC) or to both national classification and IPC

### B.    FIELDS SEARCHED

Minimum documentation searched (classification system followed by classification symbols)

IPC：G06F G06N

Documentation searched other than minimum documentation to the extent that such documents are included in the fields searched

Electronic data base consulted during the international search (name of data base and, where practicable, search terms used)

CNABS, CNTXT, ENTXTC, ENTXT, VEN, 必应, BING, 百度学术, BAIDU SCHOLAR: 集群, 配置, 分配, 资源, 运行, 执行, 完成, 时延, 时长, 时间, 耗时, 算子, 计算单元, 阈值, 门限, cluster, configuration, resource, execut+, run+, complet+, time, duration, operator, threshold

### C.    DOCUMENTS CONSIDERED TO BE RELEVANT

| Category* | Citation of document, with indication, where appropriate, of the relevant passages | Relevant to claim No. |
| --- | --- | --- |
| X | US 2019171494 A1 (CISCO TECHNOLOGY, INC.) 06 June 2019 (2019-06-06)<br>description, paragraphs 31-172, and figures 1-13 | 1-31 |
| A | CN 115495227 A (HUAWEI TECHNOLOGIES CO., LTD.) 20 December 2022 (2022-12-20)<br>entire document | 1-31 |
| A | CN 108173905 A (BEIJING QIYI CENTURY SCIENCE & TECHNOLOGY CO., LTD.) 15 June 2018 (2018-06-15)<br>entire document | 1-31 |
| A | CN 111813523 A (BEIJING QIYI CENTURY SCIENCE & TECHNOLOGY CO., LTD.) 23 October 2020 (2020-10-23)<br>entire document | 1-31 |
| A | CN 112540849 A (TSINGHUA UNIVERSITY) 23 March 2021 (2021-03-23)<br>entire document | 1-31 |
| A | CN 111124782 A (MOBILE LIFE (HANGZHOU) LIMITED) 08 May 2020 (2020-05-08)<br>entire document | 1-31 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 January 2024** | **15 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135964**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022266263 A1 (SYNC COMPUTING CORP.) 22 December 2022 (2022-12-22) entire document | 1-31 |

Form PCT/ISA/210 (second sheet) (July 2022)

**INTERNATIONAL SEARCH REPORT**
Information on patent family members

International application No.

**PCT/CN2023/135964**

| Patent document cited in search report | | | Publication date (day/month/year) | Patent family member(s) | | | Publication date (day/month/year) |
|---|---|---|---|---|---|---|---|
| US | 2019171494 | A1 | 06 June 2019 | US | 10671445 | B2 | 02 June 2020 |
| CN | 115495227 | A | 20 December 2022 | WO | 2022262646 | A1 | 22 December 2022 |
| CN | 108173905 | A | 15 June 2018 | CN | 108173905 | B | 18 June 2021 |
| CN | 111813523 | A | 23 October 2020 | | None | | |
| CN | 112540849 | A | 23 March 2021 | WO | 2022121518 | A1 | 16 June 2022 |
| | | | | CN | 112540849 | B | 26 July 2022 |
| | | | | US | 2023042890 | A1 | 09 February 2023 |
| | | | | US | 11768712 | B2 | 26 September 2023 |
| CN | 111124782 | A | 08 May 2020 | | None | | |
| WO | 2022266263 | A1 | 22 December 2022 | US | 2023004440 | A1 | 05 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211669393

- CN 202310334065